# EUROPEAN PATENT APPLICATION

(11) **EP 4 435 066 A1**
(43) Date of publication of application: **25.09.2024**
(21) Application number: 22895193.5
(22) Date of filing: 30.08.2022
(51) Int. Cl.: C09D 11/30, B41M 5/00, B41J 2/01

(54) **INK COMPOSITION FOR INK-JET PRINTING**

(30) Priority: 18.11.2021 JP 2021188120
(71) Applicant: Sakata INX Corporation, Osaka-shi, Osaka 550-0002 (JP)
(72) Inventor: MAEDA, Hirohito, Osaka-shi, Osaka 550-0002 (JP); MORIYASU, Kazuki, Osaka-shi, Osaka 550-0002 (JP); SYU, Saiei, Osaka-shi, Osaka 550-0002 (JP)
(74) Representative: Boco IP Oy Ab
(86) International application number: PCT/JP2022/032684
(87) International publication number: WO 2023/089905

(57) **Abstract**

Provided is an ink composition for inkjet printing, comprising a coloring material, water, an organic solvent, resin fine particles, and a surfactant, wherein the organic solvent includes a first organic solvent and a second organic solvent that is different from the first organic solvent, wherein a total amount of the first organic solvent and the second organic solvent is 90 mass% or more in the organic solvent, wherein the first organic solvent is propylene glycol, wherein the second organic solvent has a boiling point of 120 to 200°C, and includes at least one of glycols, glycol ethers, or methoxybutanols, and wherein a content of the first organic solvent is 15 to 50 mass% in the ink composition.

## Description

### TECHNICAL FIELD

The present invention relates to an ink composition for inkjet printing. More specifically, the present invention relates to an ink composition for inkjet printing which can be dried with thermal energy lower than that in a related art, can provide a favorable printed material, and is excellent in storage stability.

### BACKGROUND ART

Aqueous inkjet inks have hitherto been developed for printing on a variety of substrates. However, when an aqueous inkjet ink is printed on a low-absorbent substrate or a non-absorbent substrate, a large amount of thermal energy is required to volatilize a moisturizing solvent contained in the ink, and a long time is required for drying. Further, depending on a substrate, an aqueous inkjet ink shrinks due to thermal energy during drying. Thus, an aqueous inkjet ink has limited conditions for providing a favorable printed material. For example, an aqueous inkjet ink may be printed after application of a primer composition. However, this method requires equipment for applying the primer composition and thermal energy for drying the primer composition, with the result that a process is complicated. Therefore, as a method that does not involve use of a primer composition, for example, an ink composition described in Patent Document 1 is known.

### PRIOR ART DOCUMENT

### Patent Document

Patent Document 1: WO 2019/65266

### SUMMARY OF THE INVENTION

However, the ink composition described in Patent Document 1 is poor in storage stability.

The present invention has been made in view of such a problem in the related art, and an object of the present invention is to provide an ink composition for inkjet printing which can be dried with thermal energy lower than that in the related art, can provide a favorable printed material, and is excellent in storage stability.

As a result of extensive studies that have been conducted in order to solve the above-mentioned problems, the inventors of the present invention have found that the above-mentioned problems can be solved by using two kinds of organic solvents in combination in predetermined amounts, and have completed the present invention.

According to an embodiment of the invention that solves the above-mentioned problems, there is provided an ink composition for inkjet printing, comprising a coloring material, water, an organic solvent, resin fine particles, and a surfactant, wherein the organic solvent includes a first organic solvent and a second organic solvent that is different from the first organic solvent, wherein a total amount of the first organic solvent and the second organic solvent is 90 mass% or more in the organic solvent, wherein the first organic solvent is propylene glycol, wherein the second organic solvent has a boiling point of 120 to 200°C, and includes at least one of glycols, glycol ethers, or methoxybutanols, and wherein a content of the first organic solvent is 15 to 50 mass% in the ink composition.

### EMBODIMENT FOR CARRYING OUT THE INVENTION

### <Ink Composition for Inkjet Printing>

An ink composition for inkjet printing (hereinafter, also referred to as an ink composition) according to an embodiment of the present invention contains a coloring material, water, an organic solvent, resin fine particles, and a surfactant. The organic solvent includes a first organic solvent and a second organic solvent that is different from the first organic solvent. A total amount of the first organic solvent and the second organic solvent is 90 mass% or more in the organic solvent. The first organic solvent is propylene glycol. The second organic solvent has a boiling point of 120 to 200°C, and includes at least one of glycols, glycol ethers, or methoxybutanols. A content of the first organic solvent is 15 to 50 mass% in the ink composition. Each of the components will be described below.

### (Coloring Material)

The ink composition of the present embodiment contains a coloring material (pigment). The pigment is not particularly limited. Examples of the pigment include various organic pigments and inorganic pigments.

Examples of the organic pigment include dye lake pigments, azo pigments, benzimidazolone pigments, phthalocyanine pigments, quinacridone pigments, anthraquinone pigments, dioxazine pigments, indigo pigments, thioindigo pigments, perylene pigments, perinone pigments, diketopyrrolopyrrole pigments, isoindolinone pigments, nitro pigments, nitroso pigments, flavanthrone pigments, quinophthalone pigments, pyranthrone pigments, and indanthrone pigments.

Examples of the inorganic pigment include colored pigments (including achromatic color pigments such as white and black), such as titanium oxide, red iron oxide, antimony red, cadmium yellow, cobalt blue, ultramarine blue, Prussian blue, iron black, chromium oxide green, carbon black, and graphite, and extender pigments such as calcium carbonate, kaolin, clay, barium sulfate, aluminum hydroxide, and talc.

Specific examples of pigments for typical hues of the ink composition of the present embodiment are as follows. A yellow pigment is C.I. Pigment Yellow 1, 2, 3, 12, 13, 14, 16, 17, 42, 73, 74, 75, 81, 83, 87, 93, 95, 97, 98, 108, 109, 114, 120, 128, 129, 138, 139, 150, 151, 155, 166, 180, 184, 185, 213, or the like, and is preferably C.I. Pigment Yellow 150, 155, 180, 213, or the like.

A magenta pigment is C.I. Pigment Red 5, 7, 12, 19, 22, 38, 48:1, 48:2, 48:4, 49:1, 53:1, 57, 57:1, 63:1, 101, 102, 112, 122, 123, 144, 146, 149, 168, 177, 178, 179, 180, 184, 185, 190, 202, 209, 224, 242, 254, 255, 270, C.I. Pigment Violet 19, or the like, and is preferably C.I. Pigment Red 122, 202, Pigment Violet 19, or the like.

A cyan pigment is C.I. Pigment Blue 1, 2, 3, 15, 15:1, 15:2, 15:3, 15:4, 15:6, 16, 18, 22, 27, 29, 60, or the like, and is preferably C.I. Pigment Blue 15:4 or the like.

A black pigment is carbon black (C.I. Pigment Black 7) or the like.

A white pigment is titanium oxide, aluminum oxide, or the like, and is preferably titanium oxide or the like subjected to surface treatment with various materials such as alumina and silica.

A content of the pigment is not particularly limited. For example, a content of a pigment other than white is preferably 0.5 mass% or more, more preferably 2 mass% or more in the ink composition. Further, the content of the pigment other than white is preferably 10 mass% or less, more preferably 8 mass% or less in the ink composition. On the other hand, the content of the white pigment is preferably 4 mass% or more, more preferably 8 mass% or more in the ink composition. Further, the content of the white pigment is preferably 25 mass% or less, more preferably 20 mass% or less in the ink composition. When the content of the pigment falls within the range described above, the ink composition is excellent in color reproducibility.

### (Water)

Water is blended in order to impart fluidity to the ink composition. Water is evaporated by heating. The water is preferably pure water or ultrapure water from which ionic impurities have been removed as much as possible, such as ion-exchanged water, ultrafiltered water, reverse osmosis water, distilled water, or the like. Further, when water sterilized by ultraviolet irradiation, addition of hydrogen peroxide, or the like is used, it is possible to suppress generation of mold or bacteria in a case where a pigment dispersion liquid and an ink composition using the pigment dispersion liquid are stored for a long period of time, which is preferable.

A content of water is not particularly limited. For example, a content of water is preferably 10 mass% or more, more preferably 30 mass% or more in the ink composition. Further, the content of water is preferably 70 mass% or less, more preferably 50 mass% or less in the ink composition. When the content of water falls within the range described above, the ink composition can exhibit adequate fluidity.

### (Organic Solvent)

An organic solvent is blended in order to improve solid uniformity of a coating film to be obtained when an inkjet image is formed, or to dissolve a freely selected component that is not dissolved in water. In the ink composition of the present embodiment, two kinds of organic solvents (a first organic solvent and a second organic solvent) are used in combination in predetermined amounts. Accordingly, the ink composition can be dried with thermal energy lower than that in the related art, a favorable printed material can be obtained, and storage stability is excellent.

The organic solvent includes a first organic solvent and a second organic solvent that is different from the first organic solvent.

### . First Organic Solvent

The first organic solvent is propylene glycol.

A content of the first organic solvent is only required to be 15 mass% or more in the ink composition, and is preferably 20 mass% or more. Further, the content of the first organic solvent is only required to be 50 mass% or less in the ink composition, and is preferably 50 mass% or less. When the content of the first organic solvent is less than 15 mass%, ejection stability of the ink composition is degraded. On the other hand, when the content of the first organic solvent is more than 50 mass%, a coating-film drying property of the ink composition is degraded.

### . Second Organic Solvent

The second organic solvent has a boiling point of 120 to 200°C, and includes at least one of glycols, glycol ethers, or methoxybutanols.

The glycols having a boiling point of 120 to 200°C are not particularly limited. Examples of the glycols having a boiling point of 120 to 200°C include ethylene glycol.

The glycol ethers having a boiling point of 120 to 200°C are not particularly limited. Examples of the glycol ethers having a boiling point of 120 to 200°C include ethylene glycol monomethyl ether, ethylene glycol monoethyl ether, ethylene glycol monoisopropyl ether, ethylene glycol monobutyl ether, diethylene glycol monomethyl ether, propylene glycol monomethyl ether, propylene glycol monoethyl ether, propylene glycol monopropyl ether, propylene glycol monobutyl ether, dipropylene glycol monomethyl ether, ethylene glycol diethyl ether, diethylene glycol dimethyl ether, diethylene glycol diethyl ether, diethylene glycol methyl ethyl ether, dipropylene glycol dimethyl ether, ethylene glycol monopropyl ether, and ethylene glycol tertiary butyl ether.

The methoxybutanols having a boiling point of 120 to 200°C are not particularly limited. Examples of the methoxybutanols having a boiling point of 120 to 200°C include 3-methoxy-1-butanol and 3-methoxy-3-methylbutanol.

A content of the second organic solvent is only required to be 1 mass% or more in the ink composition, and is preferably 10 mass% or more, more preferably 20 mass% or more. Further, the content of the second organic solvent is preferably 50 mass% or less, more preferably 40 mass% or less in the ink composition. When the content of the second organic solvent falls within the range described above, the ink composition can achieve both the coating-film drying property and the ejection stability without impairing the storage stability.

Returning to the description of the entire organic solvent, the organic solvent of the present embodiment may include other organic solvents in addition to the first organic solvent and the second organic solvent. The other organic solvents are not particularly limited. Examples of the other organic solvents include methanol, ethanol, propanol, butanol, hexanol, glycerin, polyglycerin, acetone, acetonitrile, isopropanol, and tetrahydrofuran.

Further, a total amount of the first organic solvent and the second organic solvent is only required to be 90 mass% or more in the organic solvent, and is preferably 95 mass% or more, more preferably 98 mass% or more. When the total amount of the first organic solvent and the second organic solvent is 90 mass% or more, the ink composition is excellent in drying property, and bleeding is less liable to occur in an inkjet image to be obtained.

### (Resin Fine Particles)

The resin fine particles are blended in order to impart the coating-film drying property and scratch resistance. The resin fine particles are obtained by dispersing, in the form of fine particles, a resin that is poorly soluble or is insoluble in the organic solvent of the ink composition of the present embodiment.

The resin fine particles are not particularly limited. Examples of the resin fine particles include wax, emulsion (urethane resin fine particles, styrene-acrylic resin fine particles, acrylic resin fine particles, polyolefin resin fine particles, vinyl acetate resin fine particles, vinyl chloride resin fine particles, silicone resin fine particles, fluororesin fine particles, polyether-based resin fine particles, polyester-based resin fine particles, polycarbodiimide resin fine particles), and colloidal silica. Among those, the ink composition of the present embodiment preferably includes at least one of wax or emulsion as the resin fine particles. Accordingly, the ink composition is excellent in drying property and scratch resistance.

When the resin fine particles are wax, the wax is not particularly limited. Examples of the wax include various natural waxes and synthetic waxes.

Examples of the natural waxes include: petroleum waxes such as paraffin wax and microcrystalline wax; lignite waxes such as montan wax; vegetable waxes such as carnauba wax and candelilla wax; and animal and vegetable waxes such as beeswax and lanolin, which are dispersed in an aqueous medium to form an emulsion.

Examples of the synthetic waxes include polyalkylene wax (preferably poly-C2-C4 alkylene wax) and polyalkylene oxide wax (preferably poly-C2-C4 alkylene oxide wax). Among those, the synthetic wax is preferably polyethylene wax, polypropylene wax, oxidized polyethylene wax, oxidized polypropylene wax, or the like, more preferably oxidized polyethylene wax.

When the resin fine particles are wax, a commercially available product may be used as the wax. Examples of commercially available products include: CERAFLOUR 925, 929, 950, 991, AQUACER 498, 515, 526, 531, 537, 539, 552, 1547, AQUAMAT 208, 263, 272, MINERPOL 221, and the like manufactured by BYK Japan KK; Mitsui Highwax NL100, NL200, NL500, 4202E, 1105A, 2203A, NP550, NP055, NP505, and the like manufactured by Mitsui Chemicals, Inc.; and KUE-100, KUE-11, and the like manufactured by Sanyo Chemical Industries, Ltd. Among those, the resin fine particles as wax are preferably AQUACER 515, 531, 537, 539, and 1547, more preferably AQUACER 515, 531, 537, and 1547.

An average particle diameter of the wax is not particularly limited. For example, the average particle diameter of the wax is preferably 0.05 µm or more, more preferably 0.1 µm or more. Further, the average particle diameter of the wax is preferably 6 µm or less, more preferably 5 µm or less. When the average particle diameter of the wax falls within the range described above, the ink composition may be improved in blocking resistance of a coating film to be obtained. In the present embodiment, the average particle diameter of the wax may be measured by Nanotrac (UPA-EX150, manufactured by Nikkiso Co., Ltd.).

The resin fine particles as emulsion are not particularly limited. Examples of the resin fine particles as emulsion include homopolymers or copolymers of (meth)acrylic acid, (meth)acrylic acid ester, acrylonitrile, cyanoacrylate, acrylamide, olefin, styrene, vinyl acetate, vinyl chloride, vinyl alcohol, vinyl ether, vinylpyrrolidone, vinylpyridine, vinylcarbazole, vinylimidazole, and vinylidene chloride, fluororesins, and natural resins. Among those, the resin fine particles are preferably an acrylic resin that is a homopolymer or a copolymer of any one of (meth)acrylic monomers such as (meth)acrylic acid, (meth)acrylic acid ester, acrylonitrile, and cyanoacrylate. Further, the acrylic resin is preferably a copolymer of a (meth)acrylic monomer and a vinyl monomer. The vinyl monomer is styrene or the like, and is preferably a styrene-acrylic copolymer-based resin that is a copolymer of a (meth)acrylic monomer and styrene. The copolymer described above may be in a form of any one of a random copolymer, a block copolymer, an alternating copolymer, and a graft copolymer. In addition, the resin fine particles as emulsion may be a polyurethane-based resin, a polyester-based resin, a polyether-based resin, or the like.

A production method for the resin fine particles is not particularly limited. For example, the resin fine particles may be obtained by a method of mixing a polymerization catalyst (polymerization initiator) and a dispersant in monomers constituting a desired resin and polymerizing the mixture (that is, emulsion polymerization), a method of dissolving a resin having a hydrophilic moiety in a water-soluble organic solvent, mixing the solution in water, and then removing the water-soluble organic solvent by distillation or the like, a method of dissolving a resin in a water-insoluble organic solvent and mixing the solution in an aqueous solution together with a dispersant, or the like. The dispersant that can be used for dispersing the resin is not particularly limited. Examples of the dispersant include anionic surfactants (sodium dodecylbenzenesulfonate, sodium laurylphosphate, polyoxyethylene alkyl ether sulfate ammonium salt, and the like) and nonionic surfactants (polyoxyethylene alkyl ether, polyoxyethylene alkyl ester, polyoxyethylene sorbitan fatty acid ester, polyoxyethylene alkyl phenyl ether, and the like).

The resin fine particles as emulsion may be a commercially available product. Commercially available products include Microgel E-1002, Microgel E-5002 (manufactured by Nippon Paint Co., Ltd.), BONCOAT 4001, BONCOAT 5454 (manufactured by Dainippon Ink Chemical Industry Co., Ltd.), SAE 1014 (manufactured by Zeon Corporation), Cyvinol SK-200 (manufactured by Cyden Chemical Co., Ltd.), JURYMER AT-613 (manufactured by Toagosei Co., Ltd.), Vinyblan 700 (manufactured by Nisshin Chemical Industry Co., Ltd.), Joncryl 7100, Joncryl 390, Joncryl 711, Joncryl 511, Joncryl 7001, Joncryl 632, Joncryl 741, Joncryl 450, Joncryl 840, Joncryl 74J, Joncryl HRC-1645J, Joncryl 734, Joncryl 852, Joncryl 7600, Joncryl 775, Joncryl 537J, Joncryl 1535, Joncryl PDX-7630A, Joncryl 352J, Joncryl 352D, Joncryl PDX-7145, Joncryl 538J, Joncryl 7640, Joncryl 7641, Joncryl 631, Joncryl 790, Joncryl 780, and Joncryl 7610 (manufactured by BASF).

The resin fine particles may contain a composite resin. The composite resin is composed of two or more kinds of resins that are different from each other in the constitution (at least one of a kind or a content ratio) of monomer components constituting the resin as a resin constituting the fixing, and the two or more kinds of resins may constitute any part of the resin fine particles. In the case of using a core-shell resin in which one of two or more kinds of resins is used as a core resin and another one is used as a shell resin, where the core resin is mainly used as a resin constituting a central portion of the resin fine particle, and the shell resin is mainly used as a resin constituting a peripheral portion of the resin fine particle, it is preferable in that the characteristics of the resin can be changed in the peripheral portion and the central portion of the resin. The shell resin is only required to constitute at least part of the peripheral portion of the resin fine particle.

Returning to the description of the entire resin fine particles, an average particle diameter (volume average particle diameter) of the resin fine particles is not particularly limited. For example, the average particle diameter is preferably 5 nm or more, more preferably 50 nm or more, from the viewpoint of excellent storage stability and ejection reliability of the ink composition. Further, the average particle diameter is preferably 400 nm or less, more preferably 200 nm or less. Further, when the average particle diameter of the resin fine particles falls within the range described above, the ink composition is excellent in film-forming property, and is less liable to aggregate so that clogging is less liable to occur. A measurement method for the volume average particle diameter is not particularly limited. For example, the volume average particle diameter can be measured by a particle size distribution measuring device using the dynamic light scattering theory as the measurement principle. Examples of such a particle size distribution measuring device include "Microtrac UPA" manufactured by Nikkiso Co., Ltd.

A glass transition temperature (Tg) of the resin fine particles is preferably -20°C or more, more preferably -10°C or more. Further, the Tg is preferably 100°C or less, more preferably 80°C or less. When the Tg of the resin fine particles falls within the range described above, the ink composition may impart the coating-film drying property and scratch resistance.

The content (in terms of solid content) of the resin fine particles is not particularly limited. For example, the content of the resin fine particles is preferably 0.1 mass% or more, more preferably 0.5 mass% or more, still more preferably 2 mass% or more in the ink composition. Further, the content of the resin fine particles is preferably 15 mass% or less, more preferably 12 mass% or less, still more preferably 10 mass% or less in the ink composition. When the content of the resin fine particles falls within the range described above, the ink composition is excellent in ejection stability. Further, the ink composition is likely to form an image that is excellent in water resistance and abrasion resistance.

### (Surfactant)

A surfactant is not particularly limited. Examples of the surfactant include a nonionic surfactant, a silicone-based surfactant, and an anionic surfactant. Among those, the surfactant preferably contains at least one of the nonionic surfactant or the silicone-based surfactant. Accordingly, the surface tension of the ink composition is reduced, and wetting of a substrate surface is promoted. As a result, the ink composition is likely to form a uniform solid.

The nonionic surfactant is suitably blended in order to improve the ejection stability of the ink composition to be obtained and to reduce occurrence of foaming or bubbling.

The nonionic surfactant is not particularly limited. Examples of the nonionic surfactant include: acetylene glycol-based surfactants; acetylene alcohol-based surfactants; ether-based surfactants such as polyoxyethylene nonylphenyl ether, polyoxyethylene octylphenyl ether, polyoxyethylene dodecylphenyl ether, polyoxyethylene alkylallyl ether, polyoxyethylene oleyl ether, polyoxyethylene lauryl ether, polyoxyethylene alkyl ether, and polyoxyalkylene alkyl ether; ester-based surfactants such as polyoxyethylene oleic acid, polyoxyethylene oleic acid ester, polyoxyethylene distearic acid ester, sorbitan laurate, sorbitan monostearate, sorbitan monooleate, sorbitan sesquioleate, polyoxyethylene monooleate, and polyoxyethylene stearate; polyether-modified siloxane-based surfactants such as dimethylpolysiloxane; and fluorine-containing surfactants such as fluoroalkyl esters and perfluoroalkyl carboxylates. Among those, the nonionic surfactant is preferably a polyoxyethylene alkyl ether or an ethylene oxide adduct of acetylene glycol. In the present embodiment, the nonionic surfactant does not include the following silicone surfactants.

The silicone-based surfactant is not particularly limited. Examples of the silicone-based surfactant include "BYK-307", "BYK-333", "BYK-347", "BYK-348", "BYK-349", "BYK-345", "BYK-378", and "BYK-3455" (all manufactured by BYK Japan KK).

A content of the surfactant is not particularly limited. For example, a content of the surfactant is preferably 0.1 mass% or more, more preferably 0.3 mass% or more in the ink composition. Further, the content of the surfactant is preferably 10.0 mass% or less, more preferably 6.0 mass% or less in the ink composition.

### (Optional Components)

In the ink composition of the present embodiment, various additives such as a surfactant other than the surfactants described above, a pH adjuster, a crosslinking agent, oil droplet fine particles, an ultraviolet absorber, an anti-fading agent, a fluorescent brightener, a polysaccharide, a viscosity modifier, a specific resistance modifier, a film forming agent, an antioxidant, an antifungal agent, and a rust inhibitor may be appropriately blended.

### (Production Method for Ink Composition)

A production method for the ink composition of the present embodiment is not particularly limited. For example, the ink composition may be prepared by a method of stirring and mixing the components described above and various optional components, and then kneading the mixture using various kneading machines such as a bead mill, a ball mill, a sand mill, an attritor, a roll mill, and a pearl mill.

### <Printed Material and Inkjet Printing Method>

A printed material according to an embodiment of the present invention may be produced by ejecting droplets of the ink composition from an inkjet head of a publicly known inkjet printing apparatus (inkjet printer) and landing the droplets on a surface of a substrate to form an image. A non-absorbent film substrate or the like may be further attached to the printed layer formed using the ink composition via a laminate adhesive layer.

The substrate is not particularly limited. The ink composition of the present embodiment can be dried with thermal energy lower than that in the related art and can provide a favorable printed material. Thus, a more excellent effect is likely to be exhibited in a case where the ink composition is used for a low-absorbent substrate or a non-absorbent substrate.

The low-absorbent substrate or the non-absorbent substrate may be defined based on the measurement result of the wettability of the recording medium surface with respect to water described below. That is, a water droplet of 0.5 µL is dropped on the recording surface of the recording material, and the rate of decrease in the contact angle (comparison between the contact angle at 0.5 milliseconds after landing and the contact angle at 5 seconds after landing) is subjected to measurement to characterize the absorbability of the recording material. More specifically, in terms of properties of the recording medium, a non-absorbent recording medium is a recording medium having a characteristic in which the decrease rate of the contact angle is less than 1.0%, and a low-absorbent recording medium is a recording medium having a characteristic in which the decrease rate of the contact angle is 1.0% or more and less than 5.0%. An absorbent recording medium is defined as a recording medium having a contact angle decrease rate of 5.0% or more. The contact angle can be measured by using, for example, a portable contact-angle meter "PCA-1" (manufactured by Kyowa Interface Science Co., Ltd.).

The low-absorbent substrate or the non-absorbent substrate is not particularly limited. Examples of the low-absorbent substrate or the non-absorbent substrate include a publicly known plastic film. Examples of the plastic film include a polyester (PET) film, a polyethylene (PE) film, a polypropylene (PP) film, a nylon (NY) film, a polystyrene (PS) film, an ethylenevinyl acetate copolymer (EVA) film, a polyvinyl chloride (PVC) film, a polyvinyl alcohol (PVA) film, a polyacrylic acid (PAA) film, a polycarbonate film, a polyacrylonitrile film, and biodegradable films such as a polylactic acid film.

These films may be coated with polyvinylidene chloride on one side or both sides of the film, or may be vapor-deposited with a metal oxide, in order to impart a gas barrier property, moisture resistance, aroma retention property, and the like. Further, the film may be subjected to anti-fogging processing. Further, the film may be subjected to corona discharge, ozone treatment, or the like.

Furthermore, the film may be an unstretched film or a stretched film.

Further, the substrate may be a multi-layered substrate in which a layer such as a PVA coat is provided on the surface of an absorbent substrate such as paper to make a region to be recorded non-absorbent.

The ink composition of the present embodiment may be applied to an absorbent substrate. The absorbent substrate is not particularly limited. Examples of the absorbent substrate include printing paper from thin to thick paper subjected coating, such as plain paper, fine paper, art paper, or coated paper.

The inkjet head may be either an on-demand type inkjet head or a continuous type inkjet head. Examples of the on-demand type inkjet head include an electro-mechanical conversion type including a single cavity type, a double cavity type, a bender type, a piston type, a share mode type, and a shared wall type, and an electro-thermal conversion type including a thermal inkjet type and a bubble jet ("bubble jet" is a registered trademark of Canon Inc.) type.

Further, the inkjet head may be any one of a scan type inkjet head and a line type inkjet head.

A conveyance speed of the substrate is not particularly limited. For example, the conveyance speed is 1 to 120 m/min. Further, the substrate may be a substrate (for example, a film) stored in a roll shape.

An embodiment of the present invention has been described above. The present invention is not particularly limited to the embodiment described above. The embodiment described above mainly describes the invention having the following configuration.
(1) An ink composition for inkjet printing, comprising a coloring material, water, an organic solvent, resin fine particles, and a surfactant, wherein the organic solvent includes a first organic solvent and a second organic solvent that is different from the first organic solvent, wherein a total amount of the first organic solvent and the second organic solvent is 90 mass% or more in the organic solvent, wherein the first organic solvent is propylene glycol, wherein the second organic solvent has a boiling point of 120 to 200°C, and includes at least one of glycols, glycol ethers, or methoxybutanols, and wherein a content of the first organic solvent is 15 to 50 mass% in the ink composition.
   According to such a configuration, the ink composition for inkjet printing can be dried with thermal energy lower than that in the related art, a favorable printed material can be obtained, and is excellent in storage stability.
(2) The ink composition for inkjet printing according to (1), wherein the surfactant includes at least one of a nonionic surfactant or a silicone-based surfactant.
   According to such a configuration, the surface tension of the ink composition is reduced, and wetting of a substrate surface is promoted. As a result, the ink composition is likely to form a uniform solid.
(3) The ink composition for inkjet printing according to (1) or (2), wherein the resin fine particles include at least one of wax or emulsion.

According to such a configuration, the ink composition for inkjet printing is excellent in drying property and scratch resistance.

### EXAMPLE

In the following, the present invention will be described in more detail with reference to Examples. The present invention is not limited to these Examples. Unless otherwise specified, "%" means "mass%", and "part (s)" means "part(s) by mass".

Raw materials and preparation methods used are shown below.

### <Preparation of Aqueous Black Ink Base>

A resin varnish for pigment dispersion was prepared by adding and mixing 64.3 parts by mass of water into 23.7 parts by mass of an aqueous resin varnish prepared by the following method. 12 parts by mass of carbon black (Printex 90, manufactured by Degussa Co., Ltd.) was further added to the resin varnish for pigment dispersion, and the mixture was stirred and mixed, followed by kneading with a wet circulation mill, thereby preparing an aqueous black ink base.

### · Preparation Method for Aqueous Resin Varnish

20 parts by mass of an acrylic acid/n-butyl acrylate/benzyl methacrylate/styrene copolymer having a glass-transition temperature of 40°C, a weight-average molecular weight of 30,000, and an acid value of 185 mgKOH/g was dissolved in a mixed solution of 2.5 parts by mass of potassium hydroxide and 77.5 parts by mass of water to obtain an aqueous resin varnish having a solid content of 20%.

### <Preparation of Aqueous Yellow Ink Base>

A resin varnish for pigment dispersion was prepared by adding and mixing 64.3 parts by mass of water into 23.7 parts by mass of the above aqueous resin varnish. 12 parts by mass of a yellow pigment (Novaperm Yellow 4G01, manufactured by Clariant K.K.) was further added to the varnish, and the mixture was stirred and mixed, followed by kneading with a wet circulation mill, thereby preparing an aqueous yellow ink base.

### <Preparation of Aqueous Magenta Ink Base>

A resin varnish for pigment dispersion was prepared by adding and mixing 64.3 parts by mass of water into 23.7 parts by mass of the above aqueous resin varnish. 12 parts by mass of a magenta pigment (inkjet Magenta E5B02, manufactured by Clariant K.K.) was further added to the varnish, and the mixture was stirred and mixed, followed by kneading with a wet circulation mill, thereby preparing an aqueous magenta ink base.

### <Preparation of Aqueous Cyan Ink Base>

A resin varnish for pigment dispersion was prepared by adding and mixing 64.3 parts by mass of water into 23.7 parts by mass of the above aqueous resin varnish. 12 parts by mass of a cyan colorant (Heliogen Blue L7101F, manufactured by BASF) was further added to the varnish, and the mixture was stirred and mixed, followed by kneading with a wet circulation mill, thereby preparing an aqueous cyan ink base.

### <Preparation of Aqueous White Ink Base>

A resin varnish for pigment dispersion was prepared by adding and mixing 20.0 parts by mass of water into 40.0 parts by mass of the above aqueous resin varnish. 40 parts by mass of titanium oxide (R-960, manufactured by DuPont) was further added to the varnish, and the mixture was stirred and mixed, followed by kneading with a wet circulation mill, thereby preparing an aqueous white ink base.

### <Resin Fine Particle>

### · Polyethylene wax:

AQUACER 531 (solid content 45%, manufactured by BYK)

### · Aqueous resin emulsion:

VINYBLAN 2685 (acrylic emulsion, solid content 30%, manufactured by Nisshin Chemical Industry Co., Ltd.)
NeoRez R-966 (polyurethane-based emulsion, solid content 33%, manufactured by DSM)
SEPOLSION ES (polyester-based emulsion, solid content 50%, manufactured by Sumitomo Seika Chemicals Co., Ltd.)

### <Surfactant>

· Nonionic surfactant: Surfynol 440 (solid content 100%, HLB:8, manufactured by EVONIK)
· Silicone-based surfactant: Tego WET280 (solid content 100%, polyether siloxane polymer manufactured by EVONIK)

### <Example 1>

Ink compositions were prepared by mixing and stirring the materials according to mass ratios (mass%) shown in Table 1 below. The obtained ink compositions were evaluated for storage stability, ejection stability, drying property (1), drying property (2), solid uniformity, bleeding, and scratch resistance by the following evaluation methods. The results are shown in Table 1.

### <Storage Stability>

Each ink composition was placed in a glass bottle, and a viscosity at 25°C was measured using a viscometer (RE100L type, manufactured by Toki Sangyo Co., Ltd.). After that, the bottle was sealed and stored at 60°C for 1 month, and the viscosity (25°C) after storage was measured with the viscometer. The storage stability was evaluated by a viscosity change rate (100 × (60°C, viscosity after 1 month - viscosity before storage)/viscosity before storage).

### (Evaluation Criteria)

∘: The viscosity change rate was less than 5%.
△: The viscosity change rate was 5% or more and less than 10%.
×: The viscosity change rate was 10% or more and less than 30%.

### <Ejection Stability>

The ink composition was filled in a cartridge of a printer PX105 manufactured by Epson Corporation, and printing was performed on photographic paper GL 101A450 (manufactured by Canon Inc.).

### (Evaluation Criteria)

∘: Printing was not disturbed, and stable ejection was possible.
△: Printing was somewhat disturbed, but ejection was possible.
×: Printing was disturbed, and stable ejection was not possible.

### <Drying Property (1)>

The ink composition was filled in a cartridge of a printer PX105 manufactured by Epson Corporation, and a solid image (100% duty) was printed on OK Top Coat (manufactured by Oji Paper Co., Ltd.) and dried for 5 seconds in a warm air dryer at 60°C to obtain a printed material. After that, the printed material was rubbed once with a cotton swab, the state of the printed material was observed, and the drying property was evaluated based on the following criteria.

### (Evaluation Criteria)

∘: The solid image was not damaged at all.
△: The solid image was slightly scratched.
×: The solid image was scratched, and the paper base was observed.

### <Drying property (2)>

The ink composition was filled in a cartridge of a printer PX105 manufactured by Epson Corporation, and a solid image (100% duty) was printed on OK Top Coat (manufactured by Oji Paper Co., Ltd.) and dried for 5 seconds with a warm air dryer at 50°C to obtain a printed material. After that, the printed material was rubbed once with a cotton swab, the state of the printed material was observed, and the drying property was evaluated based on the following criteria.

### (Evaluation Criteria)

∘: The solid image was not damaged at all.
△: The solid image was slightly scratched.
×: The solid image was scratched, and the paper base was observed.

### <Solid Uniformity>

The ink composition was filled in a cartridge of a printer PX105 manufactured by Epson Corporation, and a solid image (100% duty) was printed on OK Top Coat (manufactured by Oji Paper Co., Ltd.) and dried for 5 seconds in a warm air dryer at 60°C to obtain a printed material. The solid uniformity of the printed material was visually evaluated.

### (Evaluation Criteria)

∘: The solid portion was uniform without unevenness.
×: Prominent unevenness and streaks were observed in the solid portion.

### <Bleeding>

The ink composition was filled in a cartridge of a printer PX105 manufactured by Epson Corporation, a thin line of about 0.3 mm was printed on OK Top Coat (manufactured by Oji Paper Co., Ltd.), and the printed material was dried for 5 seconds in a warm air dryer at 60°C to obtain a printed material. Then, thickening due to bleeding of the printed material was visually observed to evaluate bleeding.

### (Evaluation Criteria)

∘: The printed material was free from bleeding and printed with the original thickness.
△: The printed material was partially thickened, but no thickening by twice or more was observed.
×: The printed material was entirely thickened, and thickening by twice or more was observed.

### <Abrasion Resistance>

The ink composition was filled in a cartridge of a printer PX105 manufactured by Epson Corporation, a solid image (100% duty) was printed on OK Top Coat (manufactured by Oji Paper Co., Ltd.) and dried for 5 seconds in a warm air dryer at 60°C to obtain a printed material. The printed material was left overnight, and cut into 2.5 cm×25 cm to obtain a test piece. A bleached cloth was applied to a print surface and reciprocated 100 times with a load of 500 g using a Gakushin-type rubbing tester (manufactured by Daiei Kagaku Seiki Seisaku-sho, Ltd.), and the abrasion resistance was evaluated from the degree of ink falling off.

### (Evaluation Criteria)

∘: The ink coating film was not peeled off at all.
△: The ink coating film was slightly peeled off.
×: Most of the ink coating film was peeled off.

### <Examples 2 to 38 and Comparative Examples 1 to 19>

Ink compositions were prepared and evaluated in the same manner as in Example 1, except that the formulation was changed as shown in Tables 1 to 5. The results are shown in Tables 1 to 5.

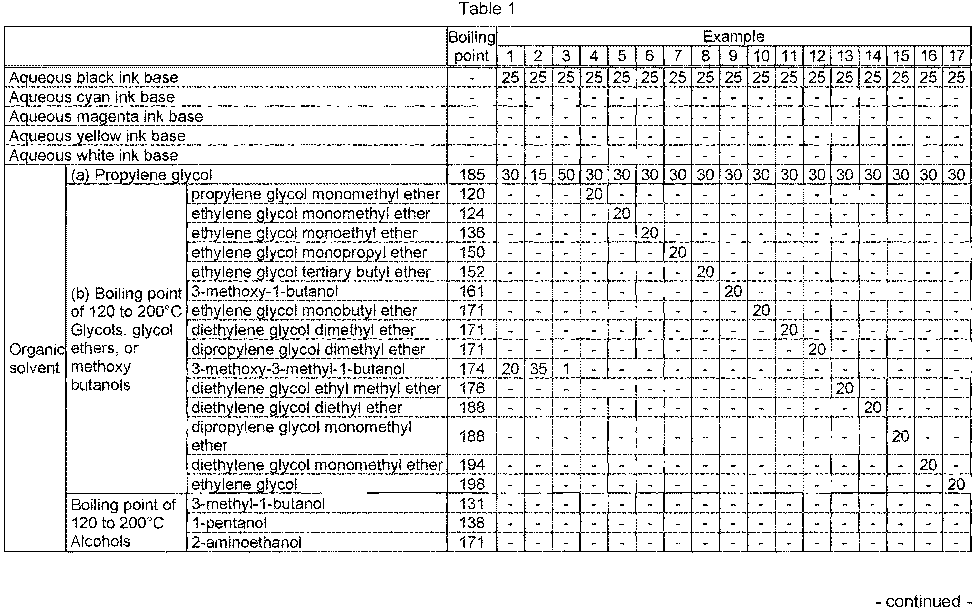

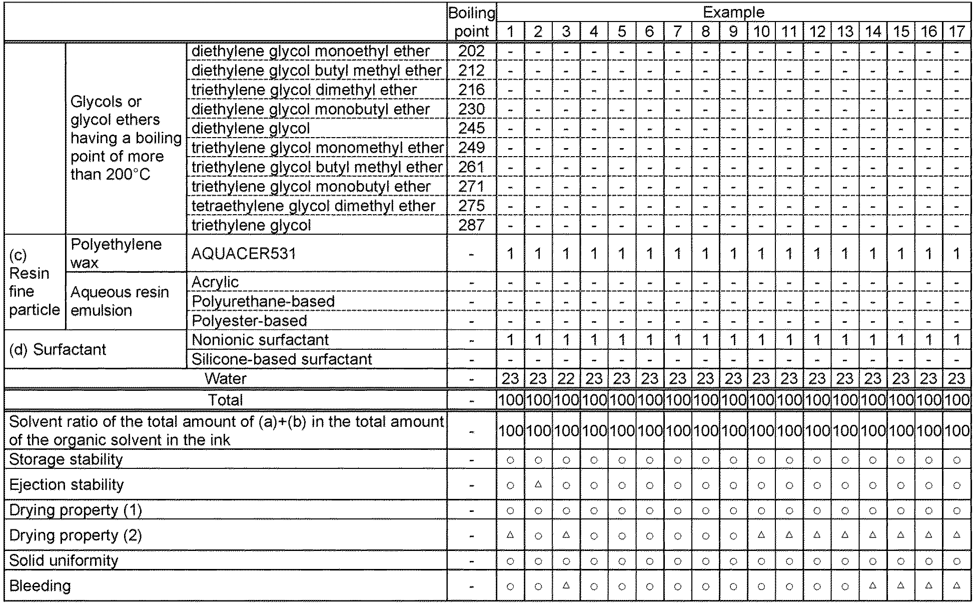

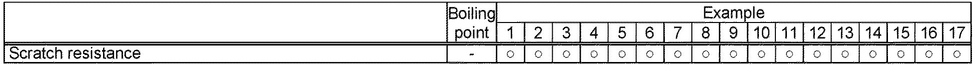

**Table 2**

| | | | Boiling point | Example | | | | | | | | | | | | |
|---|---|---|---|---|---|---|---|---|---|---|---|---|---|---|---|---|
| | | | | 18 | 19 | 20 | 21 | 22 | 23 | 24 | 25 | 26 | 27 | 28 | 29 | 30 |
| Aqueous black ink base | | | - | 25 | 25 | 25 | 25 | 25 | 25 | 25 | 25 | 25 | 25 | 25 | 25 | 25 |
| Aqueous cyan ink base | | | - | - | - | - | - | - | - | - | - | - | - | - | - | - |
| Aqueous magenta ink base | | | - | - | - | - | - | - | - | - | - | - | - | - | - | - |
| Aqueous yellow ink base | | | - | - | - | - | - | - | - | - | - | - | - | - | - | - |
| Aqueous white ink base | | | - | - | - | - | - | - | - | - | - | - | - | - | - | - |
| | (a) Propylene glycol | | 185 | 29 | 25 | 20 | 31 | 20 | 30 | 31 | 20 | 30 | 30 | 30 | 30 | 30 |
| | | propylene glycol monomethyl ether | 120 | - | - | 10 | - | - | - | - | - | - | - | - | - | - |
| | | ethylene glycol monomethyl ether | 124 | - | - | - | - | - | - | - | - | - | - | - | - | - |
| | | ethylene glycol monoethyl ether | 136 | - | - | - | - | - | - | - | - | - | - | - | - | - |
| | | ethylene glycol monopropyl ether | 150 | - | - | - | - | - | - | - | - | - | - | - | - | - |
| | | ethylene glycol tertiary butyl ether | 152 | - | - | - | - | - | - | - | - | - | - | - | - | - |
| | | 3-methoxv-1-butanol | 161 | - | - | - | - | - | - | - | - | - | - | - | - | - |
| | | ethylene glycol monobutyl ether | 171 | - | - | - | - | - | - | - | - | - | - | - | - | - |
| Organic solvent | (b) Boiling point of 120 to 200°C Glycols, glycol ethers, or methoxy butanols | diethylene glycol dimethyl ether | 171 | - | - | - | - | - | - | - | - | - | - | - | - | - |
| | | dipropylene glycol dimethyl ether | 171 | - | - | - | - | - | - | - | - | - | - | - | - | - |
| | | 3-methoxy-3-methyl-1-butanol | 174 | 20 | 20 | 20 | 20 | 20 | 20 | 20 | 20 | 20 | 20 | 20 | 20 | 20 |
| | | diethylene glycol ethyl methyl ether | 176 | - | - | - | - | - | - | - | - | - | - | - | - | - |
| | | diethylene glycol diethyl ether | 188 | - | - | - | - | - | - | - | - | - | - | - | - | - |
| | | dipropylene glycol monomethyl ether | 188 | - | - | - | - | - | - | - | - | - | - | - | - | - |
| | | diethylene glycol monomethyl ether | 194 | - | - | - | - | - | - | - | - | - | - | - | - | - |
| | | ethylene glycol | 198 | - | - | - | - | - | - | - | - | - | - | - | - | - |
| | Boiling point of 120 to 200°C Alcohols | 3-methyl-1-butanol | 131 | - | - | - | - | - | - | - | - | - | - | - | - | - |
| | | 1-pentanol | 138 | - | - | - | - | - | - | - | - | - | - | - | - | - |
| | | 2-aminoethanol | 171 | - | - | - | - | - | - | - | - | - | - | - | - | - |
| | | diethylene glycol monoethyl ether | 202 | 1 | 5 | - | - | - | - | - | - | - | - | - | - | - |
| | | diethylene glycol butyl methyl ether | 212 | - | - | - | - | - | - | - | - | - | - | - | - | - |
| | | triethylene glycol dimethyl ether | 216 | - | - | - | - | - | - | - | - | - | - | - | - | - |
| | | diethylene glycol monobutyl ether | 230 | - | - | - | - | - | - | - | - | - | - | - | - | - |
| | Glycols or glycol ethers having a boiling point of more than 200°C | diethylene glycol | 245 | - | - | - | - | - | - | - | - | - | - | - | - | - |
| | | triethylene glycol monomethyl ether | 249 | - | - | - | - | - | - | - | - | - | - | - | - | - |
| | | triethylene glycol butyl methyl ether | 261 | - | - | - | - | - | - | - | - | - | - | - | - | - |
| | | triethylene glycol monobutyl ether | 271 | - | - | - | - | - | - | - | - | - | - | - | - | - |
| | | tetraethylene glycol dimethyl ether | 275 | - | - | - | - | - | - | - | - | - | - | - | - | - |
| | | triethylene glycol | 287 | - | - | - | - | - | - | - | - | - | - | - | - | - |
| (c) Resin fine particle | Polyethylene wax | AQUACER531 | - | 1 | 1 | 1 | 0.1 | 5 | - | - | - | - | - | 1 | 1 | 1 |
| | Aqueous resin emulsion | Acrylic | - | - | - | - | - | - | 1 | 0.1 | 5 | - | - | 1 | - | - |
| | | Polyurethane-based | - | - | - | - | - | - | - | - | - | 1 | - | - | - | - |
| | | Polyester-based | - | - | - | - | - | - | - | - | - | - | 1 | - | - | - |
| (d) Surfactant | | Nonionic surfactant | - | 1 | 1 | 1 | 1 | 1 | 1 | 1 | 1 | 1 | 1 | 1 | 0.1 | 3 |
| | | Silicone-based surfactant | - | - | - | - | - | - | - | - | - | - | - | - | - | - |
| Water | | | - | 23 | 23 | 23 | 22.9 | 29 | 23 | 22.9 | 29 | 23 | 23 | 22 | 23.9 | 21 |
| Total | | | - | 100 | 100 | 100 | 100 | 100 | 100 | 100 | 100 | 100 | 100 | 100 | 100 | 100 |
| Solvent ratio of the total amount of (a)+(b) in the total amount of the organic solvent in the ink | | | - | 98 | 90 | 100 | 100 | 100 | 100 | 100 | 100 | 100 | 100 | 100 | 100 | 100 |
| Storage stability | | | - | ○ | ○ | ○ | ○ | ○ | ○ | ○ | ○ | ○ | ○ | ○ | ○ | ○ |
| Ejection stability | | | - | ○ | ○ | ○ | ○ | Δ | ○ | ○ | Δ | ○ | ○ | Δ | Δ | Δ |
| Drying property (1) | | | - | ○ | ○ | ○ | ○ | ○ | ○ | ○ | ○ | ○ | ○ | ○ | ○ | ○ |
| Drying property (2) | | | - | Δ | Δ | ○ | Δ | ○ | Δ | Δ | ○ | Δ | Δ | Δ | Δ | Δ |
| Solid uniformity | | | - | ○ | ○ | ○ | ○ | ○ | ○ | ○ | ○ | ○ | ○ | ○ | Δ | ○ |
| Bleeding | | | - | ○ | Δ | ○ | ○ | ○ | ○ | ○ | ○ | ○ | ○ | ○ | ○ | Δ |
| Scratch resistance | | | - | ○ | ○ | ○ | Δ | ○ | ○ | Δ | ○ | ○ | ○ | ○ | ○ | ○ |

**Table 3**

| | | | Boiling point | Example | | | | | | | |
|---|---|---|---|---|---|---|---|---|---|---|---|
| | | | | 31 | 32 | 33 | 34 | 35 | 36 | 37 | 38 |
| Aqueous black ink base | | | - | 25 | 25 | 25 | 25 | - | - | - | - |
| Aqueous cyan ink base | | | - | - | - | - | - | 25 | - | - | - |
| Aqueous magenta ink base | | | - | - | - | - | - | - | 25 | - | - |
| Aqueous yellow ink base | | | - | - | - | - | - | - | - | 25 | - |
| Aqueous white ink base | | | - | - | - | - | - | - | - | - | 25 |
| | (a) Propylene glycol | | 185 | 30 | 30 | 30 | 30 | 30 | 30 | 30 | 20 |
| | | propylene glycol monomethyl ether | 120 | - | - | - | - | - | - | - | - |
| | | ethylene glycol monomethyl ether | 124 | - | - | - | - | - | - | - | - |
| | | ethylene glycol monoethyl ether | 136 | - | - | - | - | - | - | - | - |
| | | ethylene glycol monopropyl ether | 150 | - | - | - | - | - | - | - | - |
| | | ethylene glycol tertiary butyl ether | 152 | - | - | - | - | - | - | - | - |
| | | 3-methoxy-1-butanol | 161 | - | - | - | - | - | - | - | - |
| Organic solvent | (b) Boiling point of 120 to 200°C Glycols, glycol ethers, or methoxy butanols | ethylene glycol monobutyl ether | 171 | - | - | - | - | - | - | - | - |
| | | diethylene glycol dimethyl ether | 171 | - | - | - | - | - | - | - | - |
| | | dipropylene glycol dimethyl ether | 171 | - | - | - | - | - | - | - | - |
| | | 3-methoxy-3-methyl-1-butanol | 174 | 20 | 20 | 20 | 20 | 20 | 20 | 20 | 20 |
| | | diethylene glycol ethyl methyl ether | 176 | - | - | - | - | - | - | - | - |
| | | diethylene glycol diethyl ether | 188 | - | - | - | - | - | - | - | - |
| | | dipropylene glycol monomethyl ether | 188 | - | - | - | - | - | - | - | - |
| | | diethylene glycol monomethyl ether | 194 | - | - | - | - | - | - | - | - |
| | | ethylene glycol | 198 | - | - | - | - | - | - | - | - |
| | Boiling point of 120 to 200°C Alcohols | 3-methyl-1-butanol | 131 | - | - | - | - | - | - | - | - |
| | | 1-pentanol | 138 | - | - | - | - | - | - | - | - |
| | | 2-aminoethanol | 171 | - | - | - | - | - | - | - | - |
| | Glycols or glycol ethers having a boiling point of more than 200°C | diethylene glycol monoethyl ether | 202 | - | - | - | - | - | - | - | - |
| | | diethylene glycol butyl methyl ether | 212 | - | - | - | - | - | - | - | - |
| | | triethylene glycol dimethyl ether | 216 | - | - | - | - | - | - | - | - |
| | | diethylene glycol monobutyl ether | 230 | - | - | - | - | - | - | - | - |
| | | diethylene glycol | 245 | - | - | - | - | - | - | - | - |
| | | triethylene glycol monomethyl ether | 249 | - | - | - | - | - | - | - | - |
| | | triethylene glycol butyl methyl ether | 261 | - | - | - | - | - | - | - | - |
| | | triethylene glycol monobutyl ether | 271 | - | - | - | - | - | - | - | - |
| | | tetraethylene glycol dimethyl ether | 275 | - | - | - | - | - | - | - | - |
| | | triethylene glycol | 287 | - | - | - | - | - | - | - | - |
| (c) Resin fine particle | Polyethylene wax | AQUACER531 | - | 1 | 1 | 1 | 1 | 1 | 1 | 1 | 1 |
| | Aqueous resin emulsion | Acrylic | - | - | - | - | - | - | - | - | - |
| | | Polyurethane-based | - | - | - | - | - | - | - | - | - |
| | | Polyester-based | - | - | - | - | - | - | - | - | - |
| (d) Surfactant | | Nonionic surfactant | - | - | - | - | 1 | 1 | 1 | 1 | 1 |
| | | Silicone-based surfactant | - | 0.05 | 0.2 | 1 | 0.2 | - | - | - | - |
| Water | | | - | 23.95 | 23.8 | 23 | 22.8 | 23 | 23 | 23 | 33 |
| Total | | | - | 100 | 100 | 100 | 100 | 100 | 100 | 100 | 100 |
| Solvent ratio of the total amount of (a)+(b) in the total amount of the organic solvent in the ink | | | - | 100 | 100 | 100 | 100 | 100 | 100 | 100 | 100 |
| Storage stability | | | - | ○ | ○ | ○ | ○ | ○ | ○ | ○ | ○ |
| Ejection stability | | | - | Δ | ○ | Δ | ○ | ○ | ○ | ○ | ○ |
| Drying property (1) | | | - | ○ | ○ | ○ | ○ | ○ | ○ | ○ | ○ |
| Drying property (2) | | | - | Δ | Δ | Δ | Δ | Δ | Δ | Δ | ○ |
| Solid uniformity | | | - | Δ | ○ | ○ | ○ | ○ | ○ | ○ | ○ |
| Bleeding | | | - | ○ | ○ | Δ | ○ | ○ | ○ | ○ | ○ |
| Scratch resistance | | | - | ○ | ○ | ○ | ○ | ○ | ○ | ○ | ○ |

**Table 4**

| | | | Boiling point | Comparative Example | | | | | | | |
|---|---|---|---|---|---|---|---|---|---|---|---|
| | | | | 1 | 2 | 3 | 4 | 5 | 6 | 7 | 8 |
| Aqueous black ink base | | | - | 25 | 25 | 25 | 25 | 25 | 25 | 25 | 25 |
| Aqueous cyan ink base | | | - | - | - | - | - | - | - | - | - |
| Aqueous magenta ink base | | | - | - | - | - | - | - | - | - | - |
| Aqueous yellow ink base | | | - | - | - | - | - | - | - | - | - |
| Aqueous white ink base | | | - | - | - | - | - | - | - | - | - |
| | (a) Propylene glycol | | 185 | 50 | 55 | 10 | 20 | 20 | 30 | 39 | 24 |
| | | propylene glycol monomethyl ether | 120 | - | - | - | - | - | - | - | - |
| | | ethylene glycol monomethyl ether | 124 | - | - | - | - | - | - | - | - |
| | | ethylene glycol monoethyl ether | 136 | - | - | - | - | - | - | - | - |
| | | ethylene glycol monopropyl ether | 150 | - | - | - | - | - | - | - | - |
| | | ethylene glycol tertiary butyl ether | 152 | - | - | - | - | - | - | - | - |
| Organic solvent | (b) Boiling point of 120 to 200°C Glycols, glycol ethers, or methoxy butanols | 3-methoxy-1-butanol | 161 | - | - | - | - | - | - | - | - |
| | | ethylene glycol monobutyl ether | 171 | - | - | - | - | - | - | - | - |
| | | diethylene glycol dimethyl ether | 171 | - | - | - | - | - | - | - | - |
| | | dipropylene glycol dimethyl ether | 171 | - | - | - | - | - | - | - | - |
| | | 3-methoxy-3-methvl 1-butanol | 174 | - | 1 | 40 | 20 | 20 | - | 5 | 20 |
| | | diethylene glycol ethyl methyl ether | 176 | - | - | - | - | - | - | - | - |
| | | diethylene glycol diethyl ether | 188 | - | - | - | - | - | - | - | - |
| | | dipropylene glycol monomethyl ether | 188 | - | - | - | - | - | - | - | - |
| | | diethylene glycol monomethyl ether | 194 | - | - | - | - | - | - | - | - |
| | | ethylene glycol | 198 | - | - | - | - | - | - | - | - |
| | Boiling point of 120 to 200°C Alcohols | 3-methyl-1-butanol | 131 | - | - | - | 10 | - | - | - | - |
| | | 1-pentanol | 138 | - | - | - | - | 10 | - | - | - |
| | | 2-aminoethanol | 171 | - | - | - | - | - | 20 | - | - |
| | Glycols or glycol ethers having a boiling point of more than 200°C | diethylene glycol monoethyl ether | 202 | - | - | - | - | - | - | 6 | 6 |
| | | diethylene glycol butyl methyl ether | 212 | - | - | - | - | - | - | - | - |
| | | triethylene glycol dimethyl ether | 216 | - | - | - | - | - | - | - | - |
| | | triethylene glycol dimethyl ether | 230 | - | - | - | - | - | - | - | - |
| | | diethylene glycol | 245 | - | - | - | - | - | - | - | - |
| | | triethylene glycol monomethyl ether | 249 | - | - | - | - | - | - | - | - |
| | | triethylene glycol butyl methyl ether | 261 | - | - | - | - | - | - | - | - |
| | | triethylene glycol monobutyl ether | 271 | - | - | - | - | - | - | - | - |
| | | tetraethylene glycol dimethyl ether | 275 | - | - | - | - | - | - | - | - |
| | | triethylene glycol | 287 | - | - | - | - | - | - | - | - |
| (c) Resin fine particle | Polyethylene wax | AQUACER531 | - | 1 | 1 | 1 | 1 | 1 | 1 | 1 | 1 |
| | Aqueous resin emulsion | Acrylic | - | - | - | - | - | - | - | - | - |
| | | Polyurethane-based | - | - | - | - | - | - | - | - | - |
| | | Polyester-based | - | - | - | - | - | - | - | - | - |
| (d) Surfactant | | Nonionic surfactant | - | 1 | 1 | 1 | 1 | 1 | 1 | 1 | 1 |
| | | Silicone-based surfactant | - | - | - | - | - | - | - | - | - |
| Water | | | - | 23 | 17 | 23 | 23 | 23 | 23 | 23 | 23 |
| Total | | | - | 100 | 100 | 100 | 100 | 100 | 100 | 100 | 100 |
| Solvent ratio of the total amount of (a)+(b) in the total amount of the organic solvent in the ink | | | - | 100 | 100 | 100 | 80 | 80 | 60 | 88 | 88 |
| Storage stability | | | - | ○ | ○ | Δ | Δ | Δ | Δ | ○ | ○ |
| Ejection stability | | | - | ○ | ○ | × | × | × | Δ | ○ | ○ |
| Drying property (1) | | | - | Δ | Δ | - | - | - | Δ | Δ | Δ |
| Drying property (2) | | | - | × | × | - | - | - | × | × | × |
| Solid uniformity | | | - | ○ | ○ | - | - | - | ○ | ○ | ○ |
| Bleeding | | | - | × | × | - | - | - | × | × | × |
| Scratch resistance | | | - | ○ | ○ | - | - | - | ○ | ○ | ○ |

**Table 5**

| | | | Boiling point | Comparative Example | | | | | | | | | | |
|---|---|---|---|---|---|---|---|---|---|---|---|---|---|---|
| | | | | 9 | 10 | 11 | 12 | 13 | 14 | 15 | 16 | 17 | 18 | 19 |
| Aqueous black ink base | | | - | 25 | 25 | 25 | 25 | 25 | 25 | 25 | 25 | 25 | 25 | 25 |
| Aqueous cyan ink base | | | - | - | - | - | - | - | - | - | - | - | - | - |
| Aqueous magenta ink base | | | - | - | - | - | - | - | - | - | - | - | - | - |
| Aqueous yellow ink base | | | - | - | - | - | - | - | - | - | - | - | - | - |
| Aqueous white ink base | | | - | - | - | - | - | - | - | - | - | - | - | - |
| | (a) Propylene glycol | | 185 | 30 | 30 | 30 | 30 | 30 | 30 | 30 | 30 | 30 | 30 | 30 |
| | | propylene glycol monomethyl ether | 120 | - | - | - | - | - | - | - | - | - | - | - |
| | | ethylene glycol monomethyl ether | 124 | - | - | - | - | - | - | - | - | - | - | - |
| | | ethylene glycol monoethyl ether | 136 | - | - | - | - | - | - | - | - | - | - | - |
| | | ethylene glycol monopropyl ether | 150 | - | - | - | - | - | - | - | - | - | - | - |
| | | ethylene glycol tertiary butyl ether | 152 | - | - | - | - | - | - | - | - | - | - | - |
| | | 3-methoxy-1-butanol | 161 | - | - | - | - | - | - | - | - | - | - | - |
| | | ethylene glycol monobutyl ether | 171 | - | - | - | - | - | - | - | - | - | - | - |
| | (b) Boiling point of 120 to 200°C Glycols, glycol ethers, or methoxy butanols | diethylene glycol dimethyl ether | 171 | - | - | - | - | - | - | - | - | - | - | - |
| Organic solvent | | dipropylene glycol dimethyl ether | 171 | - | - | - | - | - | - | - | - | - | - | - |
| | | 3-methoxy-3-methyl-1-butanol | 174 | - | - | - | - | - | - | - | - | - | - | 20 |
| | | diethylene glycol ethyl methyl ether | 176 | - | - | - | - | - | - | - | - | - | - | - |
| | | diethylene glycol diethyl ether | 188 | - | - | - | - | - | - | - | - | - | - | - |
| | | dipropylene glycol monomethyl ether | 188 | - | - | - | - | - | - | - | - | - | - | - |
| | | diethylene glycol monomethyl ether | 194 | - | - | - | - | - | - | - | - | - | - | - |
| | | ethylene glycol | 198 | - | - | - | - | - | - | - | - | - | - | - |
| | Boiling point of 120 to 200°C Alcohols | 3-methyl-1-butanol | 131 | - | - | - | - | - | - | - | - | - | - | - |
| | | 1-pentanol | 138 | - | - | - | - | - | - | - | - | - | - | - |
| | | 2-aminoethanol | 171 | - | - | - | - | - | - | - | - | - | - | - |
| | | diethylene glycol monoethyl ether | 202 | 20 | - | - | - | - | - | - | - | - | - | - |
| | Glycols or glycol ethers having a boiling point of more than 200°C | diethylene glycol butyl methyl ether | 212 | - | 20 | - | - | - | - | - | - | - | - | - |
| | | triethylene glycol dimethyl ether | 216 | - | - | 20 | - | - | - | - | - | - | - | - |
| | | triethylene glycol dimethyl ether | 230 | - | - | - | 20 | - | - | - | - | - | - | - |
| | | diethylene glycol | 245 | - | - | - | - | 20 | - | - | - | - | - | - |
| | | triethylene glycol monomethyl ether | 249 | - | - | - | - | - | 20 | - | - | - | - | - |
| | | triethylene glycol butyl methyl ether | 261 | - | - | - | - | - | - | 20 | - | - | - | - |
| | | triethylene glycol monobutyl ether | 271 | - | - | - | - | - | - | - | 20 | - | - | - |
| | | tetraethylene glycol dimethyl ether | 275 | - | - | - | - | - | - | - | - | 20 | - | - |
| | | triethylene glycol | 287 | - | - | - | - | - | - | - | - | - | 20 | - |
| (c) Resin fine particle | Polyethylene wax | AQUACER531 | - | 1 | 1 | 1 | 1 | 1 | 1 | 1 | 1 | 1 | 1 | - |
| | Aqueous resin emulsion | Acrylic | - | - | - | - | - | - | - | - | - | - | - | - |
| | | Polyurethane-based | - | - | - | - | - | - | - | - | - | - | - | - |
| | | Polyester-based | - | - | - | - | - | - | - | - | - | - | - | - |
| (d) Surfactant | | Nonionic surfactant | - | 1 | 1 | 1 | 1 | 1 | 1 | 1 | 1 | 1 | 1 | 1 |
| | | Silicone-based surfactant | - | - | - | - | - | - | - | - | - | - | - | - |
| Water | | | - | 23 | 23 | 23 | 23 | 23 | 23 | 23 | 23 | 23 | 23 | 24 |
| Total | | | - | 100 | 100 | 100 | 100 | 100 | 100 | 100 | 100 | 100 | 100 | 100 |
| Solvent ratio of the total amount of (a)+(b) in the total amount of the organic solvent in the ink | | | - | 60 | 60 | 60 | 60 | 60 | 60 | 60 | 60 | 60 | 60 | 100 |
| Storage stability | | | - | ○ | ○ | ○ | ○ | ○ | ○ | ○ | ○ | ○ | ○ | ○ |
| Ejection stability | | | - | ○ | ○ | ○ | ○ | ○ | ○ | ○ | ○ | ○ | ○ | ○ |
| Drying property (1) | | | - | Δ | Δ | Δ | Δ | Δ | Δ | Δ | Δ | Δ | Δ | ○ |
| Drying property (2) | | | - | × | × | × | × | × | × | × | × | × | × | Δ |
| Solid uniformity | | | - | ○ | ○ | ○ | ○ | ○ | ○ | ○ | ○ | ○ | ○ | ○ |
| Bleeding | | | - | × | × | × | × | × | × | × | × | × | × | ○ |
| Scratch resistance | | | - | ○ | ○ | ○ | ○ | ○ | ○ | ○ | ○ | ○ | ○ | × |

As shown in Tables 1 to 5, the ink compositions of Examples 1 to 38 were excellent in storage stability. Further, the ink compositions of Examples 1 to 38 exhibited excellent drying properties of the printed materials even when dried at 50°C, in addition to the case of drying at 60°C. Further, the ink compositions of Examples 1 to 38 were excellent in ejection stability, and printed materials that are uniform, free from bleeding, and excellent in abrasion resistance were obtained.

## Claims

1. An ink composition for inkjet printing, comprising a coloring material, water, an organic solvent, resin fine particles, and a surfactant,
wherein the organic solvent includes a first organic solvent and a second organic solvent that is different from the first organic solvent,
wherein a total amount of the first organic solvent and the second organic solvent is 90 mass% or more in the organic solvent,
wherein the first organic solvent is propylene glycol,
wherein the second organic solvent has a boiling point of 120 to 200°C, includes at least one of glycols, glycol ethers, or methoxybutanols, and includes at least one of propylene glycol monomethyl ether, ethylene glycol monomethyl ether, ethylene glycol monoethyl ether, ethylene glycol monopropyl ether, ethylene glycol tertiary butyl ether, or 3-methoxy-1-butanol, and
wherein a content of the first organic solvent is 15 to 50 mass% in the ink composition,
wherein a content of the second organic solvent is 20 to 40 mass% in the ink composition.

2. The ink composition for inkjet printing according to claim 1, wherein the surfactant includes at least one of a nonionic surfactant or a silicone-based surfactant.

3. The ink composition for inkjet printing according to claim 1 or 2, wherein the resin fine particles include at least one of wax or emulsion.
